# EUROPEAN PATENT APPLICATION

(11) **EP 2 887 627 A1**
(43) Date of publication of application: **24.06.2015**
(21) Application number: 13382524.0
(22) Date of filing: 18.12.2013
(51) Int. Cl.: H04M 3/51, G06Q 30/00, G10L 17/00, H04M 3/436

(54) **Method and system for extracting out characteristics of a communication between at least one client and at least one support agent and computer program product thereof**

(71) Applicant: Telefonica Digital España, S.L.U., 28013 Madrid (ES)
(72) Inventor: Neystadt, John (Eugene), 44471 Kfar-Saba (IL); Artzi, Lior, 28013 Madrid (ES)
(74) Representative: Carlos Hernando, Borja

(57) **Abstract**

Extracting out characteristics of a communication between at least one client and at least one support agent by voice anlysis to determine person's emotion in a call centre.

Receiving from a communication service a communication copy of a communication performed between said client and said support agent through said communication service; extracting out, of said communication copy a set of characteristics therefrom based on the analysis of a set of parameters including at least text, voice, or video parameters depending on the type of the communication; determining, a score about evaluation level of the client based on said set of extracted characteristics; sending, said determined score and the communication copy, including the communication content and meta-data, to a timing media analyzer; and determining, based on said received score and said communication copy, a number of evaluation points by applying a set of rules.

Analysis of a plurality of interactions by looking at different fragments of communications.

## Description

### Field of the invention

The present invention generally relates to communication analysis techniques. Particularly, the present invention relates to a method, a system, and a computer program product for extracting out characteristics of a communication such as an audio call, a video call, an email, a text message, etc. or set thereof between at least one client and at least one support agent.

### Background of the invention

An example of said communication analysis techniques is voice analysis techniques which can analyze speech to determine certain characteristics about the person speaking during a communication. For example, the person's mood (aggressive, excited, worried, etc.) can be gauged from characteristics of the voice. This analysis is not based on the words used, but rather on the intonation of the speaker and characteristics of the sound that have been found to be indicative of a speaker's mood, attitude, and emotions. Practical uses of this technology have to-date been restricted to providing an indication of a person's mood during a conversation/communication. For example, the technology may be utilized in call-centers to monitor performance of the operators.

Other examples are text and/or video analysis techniques.

These analysis techniques are of great importance in most Customer Support organizations in order to measure or detecting customer communications'. These measurements or detections could be used then for detecting the emotion of said communications' and therefore allowing knowing the satisfaction of the customer with the organization.

From patent application US-A1- 20100332287 it is known a system for real-time prediction of contact center customer satisfaction that discloses the use of emotion detection in text messages, together with other techniques such as text mining and machine learning.

Other previous work done that analyze human emotion, in this case from facial expressions, are known by M. Karthigayan et al 'Genetic Algorithm and Neural Network for Face Emotion Recognition'; Leh Luoh 'Image processing based emotion recognition' and by W.N. Widanagamaachchi and A.T. Dharmaratne 'Emotion Recognition with Image Processing and Neural Networks'.

However, none of those known techniques allow the detection of emotion in said customer communications', based on measuring timing parameters of the communications, such as amount, frequency, duration, etc. and also combining said timing parameters with other factors to improve speed detection and accuracy of said customers. Also, none of those known techniques benefit from the fact that, these days, often communication with an end-user is fragmented across multiple media channels - users first sends a message, then calls, then sends a message - by looking at different fragments of communications and analyzing them as a single conversation.

### Description of the Invention

Therefore, the invention in accordance to a first aspect provides a method for extracting out characteristics of a communication between at least one client and at least one support agent, comprising as commonly known in the field: receiving, by an analysis engine, from a communication service, a communication copy of a communication performed between at least one client and at least one support agent through said communication service, said communication including at least one of a text, a voice or a video communication; extracting out, by at least one media analyzer such as a voice analyzer, a text analyzer or a video analyzer in communication with said analysis engine, of said communication copy, a set of characteristics therefrom based on the analysis of a set of parameters including at least text, voice, or video parameters depending on the type of the communication; and determining, by at least one of said media analyzer, a score indicating at least an evaluation level of said client about the communication based on said set of extracted characteristics.

On contrary of the known proposals the method of the first aspect correlates different pieces of communication through one or several communication means (e.g. based on phone number/email/name of the correspondent and/or subject or a ticket-id in the message) and considers them as part of a single conversation. The proposed method allows the aforementioned extraction of the characteristics of a communication by means of sending, by said analysis engine, said determined score and the communication copy, including the communication content and meta-data including location of the client and time parameters defining the pieces of communication in the conversation, to a timing media analyzer; and determining, said timing media analyzer, based on said received score and said communication copy, a number of evaluation points by applying a set of rules, the timing media analyzer further sending said number of evaluation points to the analysis engine.

In general the evaluation points will represent a measure of the client's satisfaction/dissatisfaction with the communication. For instance, if the communication has been initiated by the client, because s/he wants to sign up to a service, a high number of points may be linked to a longer time required to do this operation and thus reflect user's dissatisfaction with the service provided by the agent.

The duration of the communication performed between the client and the support agent may comprise any time for instance two minutes, five minutes, half an hour, an hour, etc.

Generally the communication will last until the issue object of the communication would be resolved. For instance, if the communication has been initiated by the client, because s/he wants to solve a problem regarding a service that s/he has contracted with the organization for which the support agent is working, the call preferably will last until the client has solved said problem.

In accordance with an embodiment, the analysis engine can also receive a plurality of copies regarding a plurality of communications performed between said client and said support agent or even between said client and other support agents. Said plurality of communications may include any of a text, voice and/or video communications or combinations thereof. In this case, the analysis engine preferably will store in a database said communication copy or plurality of communications copies.

Then, the plurality of communications copies can be retrieved by the analysis engine from said database and can be grouped together, by correlating them for instance, by type.

The analysis engine provides an indication about said number of evaluation points when those are higher than a given threshold particular for the client.

Moreover, the analysis engine can also provide an indication in case the number of evaluation points, within a time interval, are higher a given threshold particular for said support agent or for another support agent.

The applied set of rules may be based by considering the determined score and the duration of the communication. In addition, it may be based on the time interval that the client has been waiting until an answer or reply for the communication has been made by the support agent, and/or the time interval considering fractions of time of the communication, e.g. one point for every 5 minutes of communication.

In case of having more than one communication, the set of rules may further be based by considering the interval of time occurred between the communications, e.g. one point for each hour.

In accordance with one embodiment, said indication can be provided to a dashboard or a control panel screen of a computing device.

In accordance to a second aspect there is provided a system for extracting out characteristics of communications between at least one client and at least one support agent, comprising: a communication service for copying at least one communication performed between at least one client and at least one support agent through it, said at least one communication including at least one of a text, a voice or a video communication; an analysis engine for receiving from said communication service said communication copy and for sending the latter to at least one media analyzer, wherein said media analyzer comprises any of a voice analyzer, a text analyzer or a video analyzer; and said at least one media analyzer for extracting out of said communication copy a set of characteristics therefrom based on the analysis of a set of parameters depending on the type of the communication and for determining an score indicating at least evaluation level of said client about the communication based on said set of extracted characteristics.

On contrary of the known proposals the system of the second aspect further comprises: a timing media analyzer for determining, based on said score and said communication copy, a number of evaluation points by applying a set of rules and for sending said determined number of evaluation points to the analysis engine.

In accordance with an embodiment the system further comprises a database for storing said at least one communication.

Furthermore, the system can also include a dashboard or a computing device having a control panel screen for providing an indication about said number of evaluation points.

The system of the second aspect is adapted to implement the method of the first aspect.

The subject matter described herein can be implemented in software in combination with hardware and/or firmware, or a suitable combination of them. For example, the subject matter described herein can be implemented in software executed by a processor.

According to a third aspect there is provided a computer program comprising computer program code means adapted to perform the steps according to the method of claim 1 when said program is run on a computer, a digital signal processor, a field-programmable gate array, an application-specific integrated circuit, a micro-processor, a micro-controller, or any other form of programmable hardware.

The computer program code may be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

It is to be appreciated that the term "processor" as used herein is intended to include any processing device, such as, for example, one that includes a central processing unit (CPU) and/or other processing circuitry (e.g., digital signal processor (DSP), microprocessor, etc.). Additionally, it is to be understood that the term "processor" may refer to more than one processing device, and that various elements associated with a processing device may be shared by other processing devices.

### Brief Description of the Drawings

The previous and other advantages and features will be more fully understood from the following detailed description of embodiments, with reference to the attached, which must be considered in an illustrative and non-limiting manner, in which:
Fig. 1 is an illustration of the system of the present invention according to different embodiments.
Fig. 2 is a flowchart illustrating the different processes executed by the proposed method of the present invention according to different embodiments.

### Description of Several Embodiments

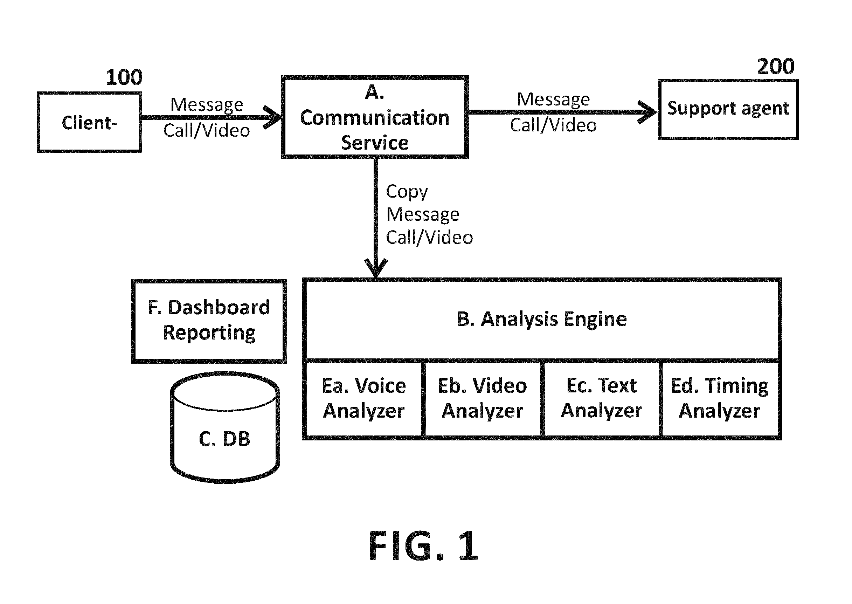

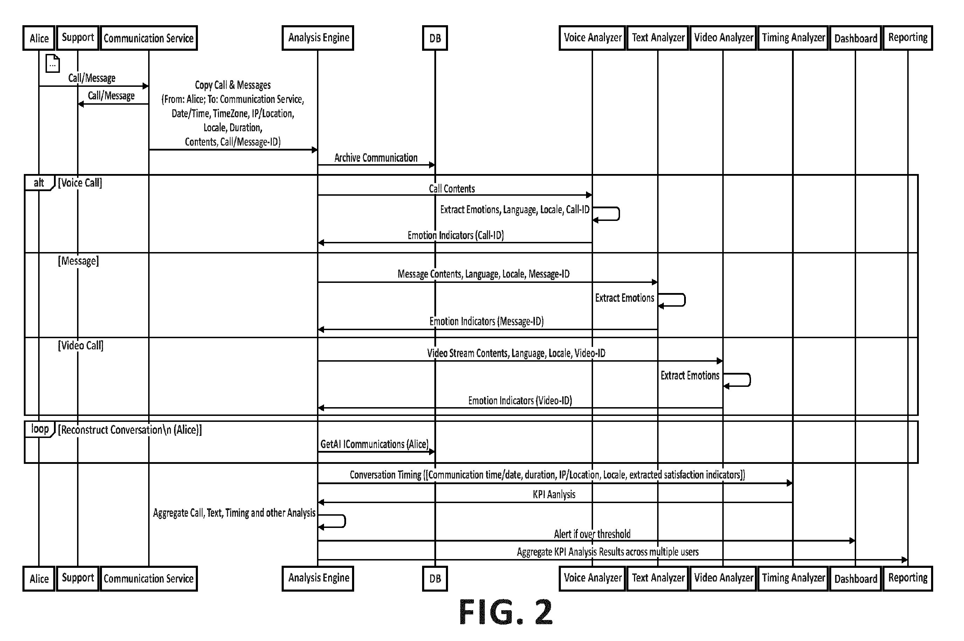

In reference to Fig. 1 and Fig. 2 are illustrated the proposed system and method for extracting out characteristics of a communication or communications according to some embodiments.

A client or Alice 100 (as termed in Fig. 2) using a communication device and/or software communicates with at least one support agent 200 via a communication Service A. The communication can include text, voice and/or video. Communication service A, sends a full copy or copies of said communication/s performed between said client 100 and said support agent 200 (even with other support agents) to an Analysis Engine B, including the communication contents and meta-data such as location, and time. Together with the communication contents, the analysis engine B extracts from the received communication copy/ies the IP/location of the client 100, the Date and Time of the communication/s, Time Zone, and duration of the communication/s. Analysis Engine B could archive the communication contents and meta-data to a Database C for future use.

Analysis Engine B then sends the contents of the communication copy/ies to a media specific analyzer including a voice analyzer Ea, a text analyzer Ec and/or a video analyzer Eb, according to the communication/s type/s. The specific media analyzer/s will use said IP/location information to perform language and culture specific analysis of said client 100.

For instance, for a voice communication, analysis engine B will send the voice contents to the voice analyzer Ea, which will extract emotions from the voice according to known techniques, such as Patent EP12164720. Voice Analyzer Ea will extract emotion measurements, such as angry, bored, excited, etc., translating said emotion to a list of indicators scores, e.g. very satisfied, satisfied, neutral, not satisfied, very not satisfied) or to a range (e.g. -1...+1) of evaluation level for instance for a satisfaction level and will send it back to analysis engine B.

For the case of a text communication, analysis engine B will send the text contents to said text analyzer Ec, which will extract emotions from text according to known techniques. Text analyzer Ea can look for specific keywords, capitalized words, exclamation marks, etc., extracting emotion measurements, such as angry, bored, excited, etc., translating said emotion to a score and will send it back to analysis engine B.

For the case of a video communication, analysis engine B will send the video contents to video analyzer Eb, which will extract images, performing facial recognition of emotions according to known techniques, such as some described in prior art. Video analyzer Eb can look for specific expressions, such as angriness, happiness, boredom, excitement, etc., translating them to a score and sends it back to Analysis Engine.

Additional media analyzers concerning other types of communications may also be added to the proposed system.

The analysis engine B will retrieve all stored communications, meta-data and their contents from the database C, and will reconstruct the conversation by grouping all the multiple communications on the same type between the client 100 and the support agent/s 200. This may be done by an explicit indication of a conversation in text communications, such as email subject or instant message conversation or by correlating all separate communications between the client 100 and support agent/s 200.

Then, analysis engine B will send the received score along with the communication copy/ies, including the communication contents and meta-data including location of the client and time parameters defining the communication/s, to a timing media analyzer Ed that will determine a number of evaluation points (for instance dissatisfaction points) by applying a set of rules, for instance, for each of the following:
1) A points, proportionally for the detected score in one communication.
2) B points proportionally to a time interval passing between the different communications (e.g. one point for each 1 hour).
3) C points proportionally to a time interval that the client 100 has been waiting until an answer or reply, call/video answer or reply to a message, for said communication/s has been made by the support agent/s 200.
4) D points proportionally to a time interval considering fractions of time of the communication (e.g. one point for every 5 minutes of communication)

It is to be noted that proportionality, may be direct or inverse, depending on the rule and the specific application of the method. At that point, timing media analyzer Ed will sum all of the number of evaluation points and sends the total operation to the analysis engine B.

Additionally the optimal value for A, B, C and D points can be calculated as a further step by utilizing machine learning algorithms such as SVM - Support Vector Machine algorithm.

Finally, analysis engine B may iterate over all the communications performed and can act based on said number of evaluation points by raising an alert to dashboard or a control panel screen of a computing device if said number of evaluation points is higher than a defined threshold specific for the client 100 or by raising an alert if said number of evaluation points within a time interval (e.g. 1h) are above a defined threshold specific for the support agent 200.

The scope of the present invention is defined in the following set of claims.

## Claims

1. A method for extracting out characteristics of a communication between at least one client and at least one support agent, comprising:
- receiving, by an analysis engine, from a communication service a communication copy of a communication performed between at least one client and at least one support agent through said communication service, said communication including at least one of a text, a voice or a video communication;
- extracting out, by at least one media analyzer in communication with said analysis engine, of said communication copy a set of characteristics therefrom based on the analysis of a set of parameters including at least text, voice, or video parameters depending on the type of the communication; and
- determining, by at least one of said media analyzer, a score indicating at least an evaluation level of said client about the communication based on said set of extracted characteristics,
wherein the method is **characterized in that** it further comprises:
- sending, said analysis engine, said determined score and the communication copy, including the communication content and meta-data including location of the client and time parameters defining the communication, to a timing media analyzer; and
- determining, said timing media analyzer, based on said received score and said communication copy, a number of evaluation points by applying a set of rules, the timing media analyzer further sending said number of evaluation points to the analysis engine.

2. A method according to claim 1, wherein said analysis engine comprises receiving a plurality of copies regarding a plurality of communications performed between said client and said support agent or another support agent, said plurality of communications including any of a text, voice and/or video communications or combinations thereof, and identifying which of said plurality of communications belong to a conversation.

3. A method according to any of previous claims, wherein the analysis engine stores in a database said communication copy or plurality of communications copies.

4. A method according to claim 3, wherein the analysis engine comprises retrieving the plurality of communications copies from said database and grouping the different communication copies together by correlating them by type.

5. A method according to claims 1 or 2, wherein said set of rules at least comprises considering said determined score and the duration of the voice and/or video communication or communications.

6. A method according to claim 5, wherein said set of rules further comprises considering, a time interval that the client has been waiting until an answer or reply is made by the support agent and/or a time interval considering fractions of time of the communication.

7. A method according to claim 2, wherein said set of rules comprises considering said determined score, the duration of the voice and/or video communications, a time interval that the client has been waiting until an answer or reply is made by the support agent, a time interval considering fractions of time of each communication and/or an interval of time that occurs between the communications.

8. A method according claims 1 or 2, further comprising providing, by the analysis engine, an indication about said number of evaluation points being higher than a given threshold particular for the client.

9. A method according to claims 1 or 2, further comprising providing, by the analysis engine, an indication about said number of evaluation points, within a time interval, being higher a given threshold particular for said support agent or another support agent.

10. A method according to previous claims 8 or 9, wherein said indication is provided to a dashboard or a control panel screen of a computing device.

11. A method according to claim 1, wherein said media analyzer comprises any of a voice analyzer, a text analyzer or a video analyzer.

12. A system for extracting out characteristics of communications between at least one client and at least one support agent, comprising:
- a communication service for copying at least one communication performed between at least one client (100) and at least one support agent (200) through it, said at least one communication including at least one of a text, a voice or a video communication;
- an analysis engine (B) for receiving from said communication service (A) said communication copy and for sending the latter to at least one media analyzer, wherein said media analyzer comprises any of a voice analyzer (Ea), a text analyzer (Ec) or a video analyzer (Eb); and
- said at least one media analyzer (Ea, Eb, or Ec) for extracting out of said communication copy a set of characteristics therefrom based on the analysis of a set of parameters depending on the type of the communication and for determining an score indicating at least evaluation level of said client (100) about the communication based on said set of extracted characteristics,
wherein the system is **characterized in that** further comprises:
- a timing media analyzer (Ed) for determining, based on said score and said communication copy, a number of evaluation points by applying a set of rules and for sending said determined number of evaluation points to the analysis engine (B).

13. A system according to claim 12, further comprising a database (C) for storing said at least one communication.

14. A system according to any of previous claims 12 or 13, further comprising a dashboard or a computing device having a control panel screen for providing an indication about said number of evaluation points.

15. A computer program comprising computer program code means adapted to perform the steps according to the method of claim 1 when said program is run on a computer, a digital signal processor, a field-programmable gate array, an application-specific integrated circuit, a micro-processor, a micro-controller, or any other form of programmable hardware.
